# EUROPÄISCHE PATENTSCHRIFT

(11) **EP 3 721 176 B1**
(45) Veröffentlichungstag und Bekanntmachung des Hinweises auf die Patenterteilung: **11.10.2023**
(21) Anmeldenummer: 18815126.0
(22) Anmeldetag: 28.11.2018
(51) Int. Cl.: G01F 25/10, G01F 15/18, G01F 1/66

(54) **VERFAHREN ZUR BETRIEBSÜBERWACHUNG EINES FLUIDSZÄHLERS SOWIE FLUIDZÄHLER**
METHOD FOR MONITORING THE OPERATION OF A FLUID METER AND FLUID METER
PROCÉDÉ DE SURVEILLANCE DU FONCTIONNEMENT D'UN COMPTEUR DE FLUIDE ET COMPTEUR DE FLUIDE

(30) Priorität: 05.12.2017 DE 102017011201
(43) Veröffentlichungstag der Anmeldung: 14.10.2020
(73) Patentinhaber: Diehl Metering GmbH, 91522 Ansbach (DE)
(72) Erfinder: KROEMER, Harald, 91522 Ansbach (DE)
(74) Vertreter: Diehl Patentabteilung
(86) Internationale Anmeldenummer: PCT/EP2018/082842
(87) Internationale Veröffentlichungsnummer: WO 2019/110387

(56) Entgegenhaltungen:
- EP-A1- 3 112 823
- GB-A- 2 447 691
- US-A1- 2005 011 278
- US-A1- 2010 192 703

## Beschreibung

Die vorliegende Erfindung betrifft zum einen ein Verfahren zur Betriebsüberwachung eines in einem Fluidleitungsnetz, z. B. Wasserleitungsnetz, zur Fluidversorgung installierten Fluidzählers sowie zum anderen einen Fluidzähler.

### Technologischer Hintergrund

Fluidzähler werden beispielsweise als Wasserzähler zur Bestimmung der Durchflussmenge von Wasser bzw. des Trinkwasserverbrauchs in Haushalten oder Unternehmen oder als Wärmemengenzähler zur Ermittlung der verbrauchten Wärmeenergie eingesetzt.

Die Durchflussmengenbestimmung kann hierbei mechanisch (z. B. Flügelradwasserzähler), magnetisch-induktiv oder mittels einer Ultraschallmessanordnung erfolgen. Die Funktionsweise eines Ultraschallfluidzählers basiert auf dem Einsatz von Ultraschallwandlern mit piezoelektrischen Ultraschallwandlerkörpern. Hierbei bilden in der Regel zwei Ultraschallwandler ein Ultraschallwandlerpaar, mit einer zwischen den Ultraschallwandlern befindlichen Messstrecke. Entlang der Messstrecke verlaufen Ultraschallwellen bzw. Ultraschallsignale, insbesondere in Form sogenannter Ultraschallbursts, die von den Ultraschallwandlern jeweils ausgesendet bzw. empfangen werden.

Die Durchflussmengenbestimmung des Fluids mittels einer Ultraschallmessanordnung erfolgt üblicherweise anhand einer Laufzeitdifferenzmessung der Ultraschallsignale. Die Laufzeitdifferenz wird dadurch bestimmt, dass zunächst ein Ultraschallsignal von einem ersten Ultraschallwandler zu einem zweiten Ultraschallwandler entlang der Messstrecke in Durchströmungsrichtung gesendet wird. Anschließend wird ein Ultraschallsignal vom zweiten Ultraschallwandler entlang der Messstrecke entgegengesetzt der Durchströmungsrichtung hin zum ersten Ultraschallwandler gesendet. Die Laufzeit des Ultraschallsignals von einem Ultraschallwandler zum anderen Ultraschallwandler entlang der Messstrecke in Durchströmungsrichtung des Fluids ist kleiner als entgegengesetzt der Durchströmungsrichtung des Fluids. Diese zeitliche Differenz der Laufzeiten der Ultraschallsignale wird als Laufzeitunterschied oder Laufzeitdifferenz der Ultraschallsignale bezeichnet. Anhand dieses Laufzeitunterschieds und der bekannten Dimension des Ultraschallfluidzählers kann der Durchfluss bzw. das Volumen des Fluids durch eine Rechen-, Steuer und/oder Auswerteeinheit bestimmt werden. Fluidzähler verfügen über eine autarke Energieversorgung in Form einer Batterie.

An die Durchflussbestimmung werden zunehmend größere Anforderungen gestellt. Vor allem ist man bestrebt, den Messbereich des Fluidzählers zu erweitern sowie die Messgenauigkeit zu verbessern. Hierbei spielt die Abhängigkeit der Messgenauigkeit und Messdynamik von verschiedenen physikalischen Parametern und Gegebenheiten, wie Fluiddruck, Fluidtemperatur, Störeinflüssen, Verschmutzungen, Montagefehler, Bauteilbeschädigungen und Bauteiltoleranzen eine wichtige Rolle. Einflüsse, die einen einwandfreien Betrieb eines Fluidzählers negativ beeinträchtigen, wirken sich auch negativ auf die Messgenauigkeit aus. In Anbetracht dessen besteht ein Bedürfnis an einem möglichst einwandfreien Betrieb eines Fluidzählers.

Als Störeinflüsse beim Betrieb eines Fluidzählers kommen insbesondere Druckschläge, Kavitationen, Verschmutzungen, Fehlmontagen usw. in Frage. Bei der Kavitation handelt es sich um die Bildung und Auflösung von Dampfbläschen in dem Fluid aufgrund sich verändernder Druckverhältnisse im Inneren des Fluidzählers bei hohen Strömungsgeschwindigkeiten im Durchfluss. Besonders durch Kavitation gefährdete Bereiche in einem Fluidzähler sind solche, bei denen die Fluidströmungen konstruktionsbedingt umgeleitet werden oder Verengungen passieren, sodass sich bei zu hohen Strömungsgeschwindigkeiten strömungsbedingt Unterdruckbereiche bilden, in denen Kavitation auftreten kann. Ebenso kann Kavitation auch durch im Fluidzähler befindliche Fremdkörper, die aus dem Fluidnetzwerk stammen, begründet werden. Ebenso können auch Montagefehler Kavitation verursachen. Kavitation kann auch durch nicht normgerechte, sehr hohe Durchflüsse außerhalb der Spezifikation eines Fluidzählers entstehen.

Kavitation begründet zum einen eine Verfälschung des Messergebnisses der Durchflussmengenbestimmung bzw. gegebenenfalls sogar einen Totalausfall des Messergebnisses, zum anderen kann bei Kavitation, vor allem auch dann, wenn sie über einen längeren Zeitraum stattfinden sollte, sogar eine Bauteilbeschädigung eintreten. Auch eine solche würde zu einer Verfälschung der Messergebnisse führen und damit Messungenauigkeiten begründen.

### Druckschriftlicher Stand der Technik

In der US 2005/011278 A1 wird eine Diagnosevorrichtung zur Verwendung in einem industriellen Prozess offenbart, welche eine Überwachungselektronik oder Diagnoseschaltung umfasst, die so konfiguriert ist, dass sie einen Zustand oder ein anderes Ereignis im industriellen Prozess diagnostiziert oder identifiziert. Das System kann in einem Prozessgerät, wie z. B. einem Durchflussmesser, implementiert werden.

Die US 2010/192703 A1 beschreibt ein Verfahren zur Messung von Strömungseigenschaften und Durchflussmessgeräte mit einem stromaufwärts gelegenen Transceiver und einem stromabwärts gelegenen Wellen-Transceiver, von denen jeder mit einer wellenemittierenden Oberfläche ausgestaltet ist, die einem in einer Leitung strömenden Fluid ausgesetzt ist, wobei der Transceiver durch eine Länge L entlang der Leitung getrennt ist und angepasst ist, um Wellensignale zu empfangen, die sich in Strömungsrichtung bzw. entgegengesetzt zur Strömungsrichtung ausbreiten, bzw. entgegen der Strömungsrichtung ausbreitende Wellensignale zu empfangen. Ferner ist ein elektronischer Prozessor vorgesehen, um aus Lauf-zeitmessungen der Wellensignale strömungscharakterisierende Parameter zu extrahieren. Die Transceiver sind geeignet, Rohrwellen, insbesondere im hörbaren Frequenzbereich, in der Leitung zu erzeugen und zur Bestimmung der Laufzeit der Rohrwellen zwischen dem stromaufwärts gelegenen Transceiver und dem stromabwärts gelegenen Wellen-Transceiver zu verwenden.

Aus der EP 3 112 820 A1 ist ein Ultraschall-Durchflusszähler mit einem Geräuschsensor bekannt, mit dem Leckagen aufgrund zerborstener Rohrleitungen in einem Fluidversorgungsnetz detektiert werden sollen. Über den Empfang eines solchen Geräusches durch eine Mehrzahl von im Fluidversorgungsnetz angeordneter Zähler wird der Ort der Leckage im Fluidversorgungsnetz bestimmt. Zur Lokalisierung des Leckagegeräusches im Fluidversorgungsnetz müssen die Empfangssignale mehrere Fluidzähler an unterschiedlichen Orten im Fluidversorgungsnetz ausgewertet werden. Zum Empfang des Leckagegeräusches kann im Fluidzähler entweder ein zusätzlicher Ultraschallwandler vorgesehen sein oder aber ein Ultraschallwandler, der bereits zur Laufzeitmessung verwendet wird, zusätzlich für die Geräuschbestimmung zum Einsatz kommen.

Aus der EP 3 112 823 A1 ist ein System zur Überprüfung eines Fluidnetzwerks unter Verwendung einer Vielzahl von Fluidzählern bekannt, die mit einem vorgenannten Geräuschsensor ausgestattet sind.

### Aufgabe der vorliegenden Erfindung

Die Aufgabe der vorliegenden Erfindung besteht darin, ein Verfahren zur Betriebsüberwachung eines Fluidzählers zur Verfügung zu stellen, mit dem die Messgenauigkeit und Messstabilität des Fluidzählers im Vergleich zu bisherigen Fluidzählern verbessert werden kann. Darüber hinaus besteht die Aufgabe der vorliegenden Erfindung darin, einen entsprechenden Fluidzähler zur Verfügung zu stellen.

### Lösung der Aufgabe

Die vorstehende Aufgabe wird durch die Merkmale des Anspruchs 1 bzw. des Anspruchs 9 gelöst. Zweckmäßige Ausgestaltungen des erfindungsgemäßen Verfahrens bzw. Fluidzählers sind in den abhängigen Ansprüchen beansprucht.

Die Idee der vorliegenden Erfindung besteht darin, den Betrieb des Fluidzählers in Bezug auf ein den Ultraschallwandler mechanisch anregendes, nicht der Durchflussmessung zuzurechnendes Ereignis in Form eines in seinem Inneren auftretendes, durch den Betrieb des Fluidzählers bedingtes Geräusch und/oder eines aus dem Fluidnetz stammenden Druckschlags zu überwachen und zwar unter selektiver Erfassung und Auswertung eines solchen sich vom Signal des Normalbetriebs unterscheidenden Signals. Das erfindungsgemäße Verfahren ermöglicht es somit, Störereignisse im Fluidzähler zu erkennen, auszuwerten und bei der Überwachung des individuellen Fluidzählers mit einzubeziehen und somit anhand des Ergebnisses dieser Auswertung mindestens eine Fluidzähler-individuelle Betriebseigenschaft zu definieren. Beispielsweise könnten hierdurch auch Falschmontagen, wie z. B. eine sich bei der Montage verschobene Dichtung, oder sich im Zähler festgesetzte Fremdkörper oder Messperioden mit verschlechterter Messgenauigkeit oder sogar Messperioden ohne Durchflusserfassung sicher erkannt, dokumentiert und/oder abgestellt werden.

Erfindungsgemäß werden die selektiv erfassten, durch den Betrieb des Fluidzählers bedingten Ereignisse über der Zeit t summiert zu einer Ereignisgesamtdauer D und/oder einer Ereignisgesamtintensität I und im Fluidzähler aufgezeichnet. Dies ermöglicht eine kontinuierlich Überprüfung des Schädigungseinflusses auf den Fluidzähler und damit eine Abschätzung seiner Intaktheit.

Erfindungsgemäß wird eine geräteindividuelle Ereignishistorie anhand der über die Zeit t erfassten Signale erstellt und kann vorzugsweise bei Bedarf ausgegeben oder angezeigt werden.

Zudem kann bzw. können ein erfasstes Ereignis und/oder eine geräteindividuelle Ereignisinformation und/oder die geräteindividuelle Ereignishistorie einer empirisch ermittelten Ereigniskennlinie und/oder Ereigniskenngröße des Fluidzählers gegenübergestellt werden und aus dieser Gegenüberstellung eine Steuer- und/oder Kontrollgröße abgeleitet werden.

Das erfindungsgemäße Verfahren ermöglicht es insbesondere, bei Überschreiten einer festgelegten Ereignisdauer D und/oder Ereignisintensität I ein Warnsignal und/oder eine Warnmeldung zu erzeugen.

Vorzugsweise kann bei einem Druckschlag dessen Maximalintensität erfasst und ausgewertet werden. Beispielsweise kann bei Detektion eines Druckschlags oberhalb einer bestimmten Größenordnung (Amplitude) daraus als Fluidzähler-individuelle Betriebseigenschaft abgeleitet werden, dass dieser Fluidzähler zerstört oder zumindest dessen Messgenauigkeit dauerhaft nachteilig beeinträchtigt sein muss.

Dadurch, dass eine Steuer- und Auswerteeinrichtung des Fluidzählers abwechselnd in einem Aktivmodus und einem Sleepmodus betrieben wird und die Steuer- und Auswerteeinrichtung derart hergerichtet ist, dass sie anhand eines durch ein Ereignis oder Geräusch vom Ultraschallwandler erzeugten elektrischen Signals eine Umschaltung der Steuer- und Auswerteeinrichtung vom Sleepmodus in den Aktivmodus vornimmt, kann trotz einer Betriebsüberwachung die autarke Energiequelle des Fluidzählers weitestgehend geschont werden. Die Steuer- und Auswerteeinrichtung "erwacht" somit lediglich dann, wenn tatsächlich ein "störfalltypisches Ereignis" bzw. Geräusch, welches vom Fluidzähler selbst stammt, vorliegt oder ein störfalltypischer Druckschlag am Ultraschallwandler angekommen ist.

Zweckmäßigerweise handelt es sich bei dem elektrischen Signal um einen festgelegten Signalpegel (Mindestsignalpegel), um ein Signalmuster und/oder um ein besonderes Frequenzspektrum. Typische Störfallereignisse können empirisch erfasst, digitalisiert und in der Steuer- und Auswerteeinrichtung "hinterlegt" sein, um einen Vergleich und eine schnelle Zuordnung vornehmen zu können. Ein typisches "Störfallgeräusch" bei einer Kavitation aufgrund z. B. eines nicht normgerechten sehr hohen Durchflusses, in das Rohrinnere hineinragender Dichtungen oder sich im Rohrinneren festgesetzter, den Durchflussquerschnitt verengender Gegenstände z. B. Steine ist ein nichtperiodisches Rauschsignal mit sehr breitem Spektrum. Ein typisches "Störfallgeräusch" bei einem Druckschlag aufgrund z. B. einer ungewollt schlagartig schließenden Klappe (Ventil) ist demgegenüber ein scharf einsetzender Spannungspeak mit einer periodisch abklingenden Schwingung relativ niedriger Frequenz.

Erfindungsgemäß wird das Störfallereignis mit einem Zeitstempel versehen. Hierdurch ist es möglich, das Auftreten von Störungen einem genauen Zeitpunkt oder einer genauen Zeitspanne zuzuordnen. Letzteres ermöglicht es wiederum, Messergebnisse, in die der Zeitpunkt oder die Zeitspanne fallen, zu überprüfen und ggf. zu berichtigen.

Wenn ein Ultraschallwandler, welcher im Rahmen einer Ultraschallwandleranordnung zur Laufzeitermittlung verwendet wird, zusätzlich zur selektiven Erfassung und Auswertung eines Störfallgeräusches verwendet wird, kann die vorliegende Erfindung sogar allein auf Grundlage der vorhandenen Komponenten implementiert werden. Lediglich die Signalaufbereitung muss entsprechend angepasst werden.

Die vorliegende Erfindung betrifft darüber hinaus einen Durchflusszähler gemäß dem Oberbegriff des Anspruchs 9. Zur Lösung der eingangs genannten Aufgabe ist vorgesehen, dass das Betriebssystem einen neben der Durchflussmessung zusätzlichen Funktionsmodus beinhaltet, bei dem der Ultraschallwandler ein den Ultraschallwandler mechanisch anregendes Ereignis in Form eines im Fluidzähler auftretenden Geräusches und/oder in Form eines Druckschlags selektiv erfasst und auswertet.

Im Rahmen des Betriebs des Elektronikmoduls wird das Störfallereignis, welches vorzugsweise mit einem Zeitstempel (Ist-Zeitstempel) versehen sein kann, abgespeichert und/oder ausgegeben. Es kann bei Bedarf auch an eine übergeordnete Datensammeleinrichtung (Konzentrator bzw. Datensammler) über eine geeignete Kommunikationsverbindung, z.B. Funkverbindung, übertragen werden. Die Übertragung der Daten in Bezug auf das Auftreten von Störfallereignissen kann losgelöst von den Verbrauchsdaten oder zusammen mit diesen erfolgen.

Bei dem Durchflusszähler gemäß der vorliegenden Erfindung handelt es sich vorzugsweise um einen solchen, der über ein eigenständiges Anschlussgehäuse verfügt, mittels dem der Durchflusszähler in das Fluidnetz installierbar ist.

Vorzugsweise weist der Durchflusszähler einen Einsatz auf, der jeweils einen Ultraschallwandler beherbergt und durch eine Öffnung im Anschlussgehäuse in den Messkanal etwas hineinragt. Gerade bei einer solchen Konstruktion kann es bei nicht vorhergesehenen Drucküberhöhungen zu einem unerwünschten Auftreten von Kavitationen bzw. generell zu Störfällen kommen.

Vorzugsweise handelt es sich es sich bei dem Störfallereignis jeweils um ein Fluidzähler-internes Kavitationsgeräusch und/oder ein Fluidzähler-internes Vibrationsgeräusch und/oder einen Druckschlag und/oder eine mechanische Beanspruchung durch fluidtransportierte Partikel.

### Beschreibung der Erfindung anhand von Ausführungsbeispielen

Nachstehend werden Ausgestaltungen der vorliegenden Erfindung anhand von Zeichnungen näher erläutert. Es zeigen:
- Fig. 1: eine Schnittdarstellung durch das Anschlussgehäuse sowie den Messeinsatz eines Ultraschalldurchflusszählers;
- Fig. 2: verschiedenartige im Betrieb eines Fluidzählers auftretende Störgeräusche in stark vereinfachter, schematischer Darstellungsweise;
- Fig. 3: eine Störgeräuschhistorie eines Fluidzählers über der Zeit in stark vereinfachter, schematischer Darstellungsweise;
- Fig. 4: ein Beispiel einer Informationsausgabe eines erfindungsgemäßen Fluidzählers sowie
- Fig. 5: ein Störfallzeitprotokoll eines erfindungsgemäßen Fluidzählers.

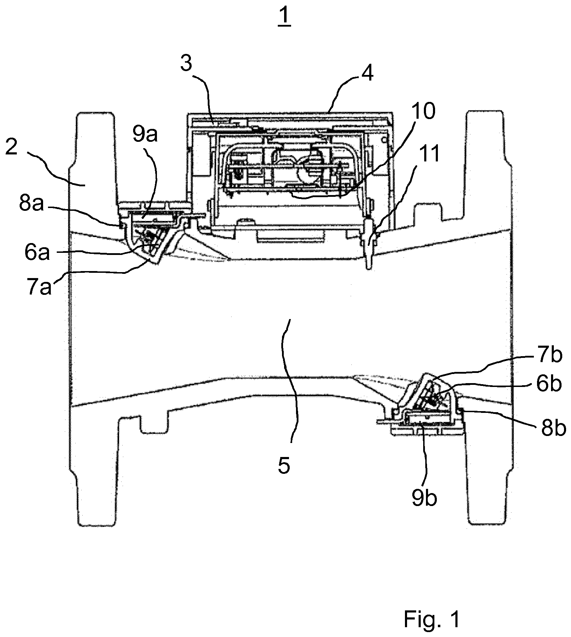

Bezugszeichen 1 in Fig. 1 bezeichnet einen auf Ultraschalltechnik beruhenden Fluidzähler zur Messung der Durchflussmenge an Fluid, z.B. Wasser, in einem Fluidversorgungsnetzwerk. Der Fluidzähler verfügt über ein sogenanntes Anschlussgehäuse 2, mittels dem der Fluidzähler in eine (in Fig. 1 nicht dargestellte) Rohrleitung des Fluidversorgungsnetzwerks installiert wird. An der Oberseite befindet sich ein Elektronikmodul 3 mit Elektronikkomponenten wie Steuerungseinrichtung (Mikroprozessor), Anzeige 4, Batterie, Platine 10 sowie Speicher. Im Elektronikmodul 4 kann vorzugsweise auch eine Funkkommunikationseinrichtung zur Kommunikation mit einem entfernt positionierten (nicht dargestellten) Datensammler (Konzentrator) untergebracht sein.

Das Anschlussgehäuse 2 umfasst beispielsweise zwei Wanddurchbrüche, in die jeweils ein aus durchschallbarem Material (z. B. Kunststoff) bestehender Einsatz 7a, 7b eingesetzt und durch eine Dichtung 8a, 8b zum Anschlussgehäuse 2 abgedichtet ist. An der Innenwandung des jeweiligen Einsatzes 7a, 7b befindet sich ein Ultraschallwandler 6a, 6b in fester Positionierung zum Aussenden eines Ultraschallsignals durch die Wandung des jeweiligen Einsatzes 7a, 7b hindurch schräg bzw. diagonal in den Messkanal 5 hinein hin zum gegenüberliegenden Ultraschallwandler 6b bzw. zum Empfang eines vom gegenüberliegenden Ultraschallwandler 6b ausgesandten Ultraschallsignals. Es können auch mehr als zwei Wanddurchbrüche für mehr als zwei gegenüberliegende Ultraschallwandler vorgesehen sein. Die jeweiligen Einsätze 7a, 7b sind durch zugehörige Deckel 9a, 9b verschliessbar. Die Ultraschallwandler 6a, 6b sind über Signalstrecken mit dem Elektronikmodul 3 verbunden. Der Fluidzähler gemäß Fig. 1 kann bei Bedarf ferner über einen Temperaturfühler 11 verfügen, der durch eine oberseitige Öffnung 14 in das Innere des Anschlussgehäuses 2 ragt und ebenfalls über eine Signalstrecke mit dem Elektronikmodul verbunden ist.

Im normalen Betrieb zeigt der Fluidzähler über sein Display 4 den jeweiligen Fluidverbrauch, d.h. die durch den Fluidzähler hindurchgeflossene Menge an Fluid, an. Fluidzähler werden üblicherweise geeicht und mittels einer Verplombung oder dergleichen vor Manipulationen geschützt.

Gemäß der vorliegenden Idee wird mindestens einer der beiden Ultraschallwandler 6a, 6b dazu verwendet, durch den Betrieb des Fluidzählers 1 bedingte dynamische Geräusche zu erkennen, selektiv zu erfassen, auszuwerten und daraus eine Fluidzähler-individuelle Betriebseigenschaft zu generieren. Wird der Fluidzähler 1 beispielsweise fehlerhaft eingebaut, indem ein Teil einer Dichtung in den Durchflussquerschnitt der Fluidzählers 1 hineinragt, wird hierdurch bei hohen Durchflüssen ggf. ein Turbulenzbereich gebildet, wodurch es zu Kavitationen kommen kann, die als dynamisches Geräusch vom Ultraschallwandler festgestellt werden können. Das Auftreten von Kavitationen kann dazu führen, dass durch Materialabtrag an Oberflächen und/oder Kanten sich die strömungsführende Innengeometrie des Ultraschallwandlers bzw. des Messeinsatzes über die Zeit hinweg ändert und damit die Messgenauigkeit sich verschlechtert.

Aber auch bei einem ordnungsgemäß eingebauten Fluidzähler 1 kann es zu schädlichen Kavitationen kommen, beispielsweise dann, wenn Fluid, z.B. Wasser mit zu hohem d. h. nicht normgerechtem Druck in das Anschlussgehäuse 2 des Fluidzählers 1 einströmt. Es können sich hierbei Turbulenzbereiche, insbesondere um die Einsätze 7a, 7b herum bilden, die zu erheblichen Kavitationen führen. Ebenso kann festgestellt werden, wenn ein Fluidzähler im eingebauten Zustand versehentlich nur mangelhaft befestigt worden ist und es im Betrieb deshalb zu Vibrationen kommt.

Zusätzlich kann mindestens einer der beiden Ultraschallwandler 6a, 6b auch dazu verwendet, einen im Fluidversorgungsnetzwerk (beispielsweise durch Bauarbeiten oder durch Fehlfunktion einer Drosselstelle) begründeten Druckschlag zu erfassen, um daraus eine Fluidzähler-individuelle Betriebseigenschaft zu generieren.

Ein entsprechendes Störereignis kann anhand der besonderen Signalform bzw. anhand des besonderen Signalmusters erkannt werden.

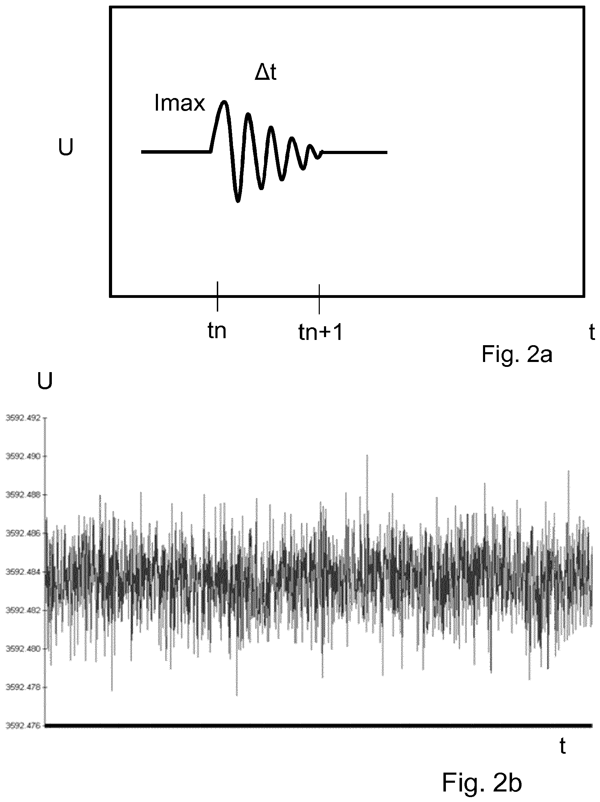

Fig. 2a zeigt beispielsweise eine Signalform eines abrupten Spannungsanstiegs (maximaler Pegel Imax zu Beginn) bei tn und eine über einen gewissen Zeitraum Δt andauernde periodisch abklingende Schwingung mit relativ niedriger Frequenz bis tn+1.. Aus der Signalform, der Signalfrequenz und/oder dem Signalmuster kann auf die Art der Störung geschlossen werden. In vorliegendem Beispiel handelt es sich z. B. um eine Signalform, die durch das Auftreten eines kurzeitig erhöhten Drucks (z. B. Druckschlag aufgrund eines schlagartig geöffneten Ventils) beruht. Darüber hinaus kann das erfindungsgemäße Verfahren den exakten Zeitpunkt, die Dauer der auftretenden Störung und/oder deren Intensität festhalten. Bei tn und tn+1 handelt es sich jeweils um die Istzeit, also die exakte Tageszeit des Auftretens der Störung und der genaue Zeitpunkt deren Beendigung.

Zusätzlich zu der Erfassung der Spannung kann auch eine Erfassung der Signalfrequenz erfolgen.

Bei der Signalform bzw. dem Signalmuster gemäß Fig. 2b handelt es sich um ein kavitationstypisches Signal. Das Signal entspricht einem starken Rauschen mit breitem unspezifischen Frequenzspektrum sowie einer im Vergleich zu Fig. 2a hohen Frequenz bedingt z. B. durch nicht normgerechte, sehr hohe Durchflüsse außerhalb der Spezifikation des Fluidzählers. Bei einem derartigen Vorfall wäre eine korrekte Durchflussbestimmung nicht mehr gewährleistet oder mangels einem auswertbarem Signal überhaupt nicht mehr möglich.

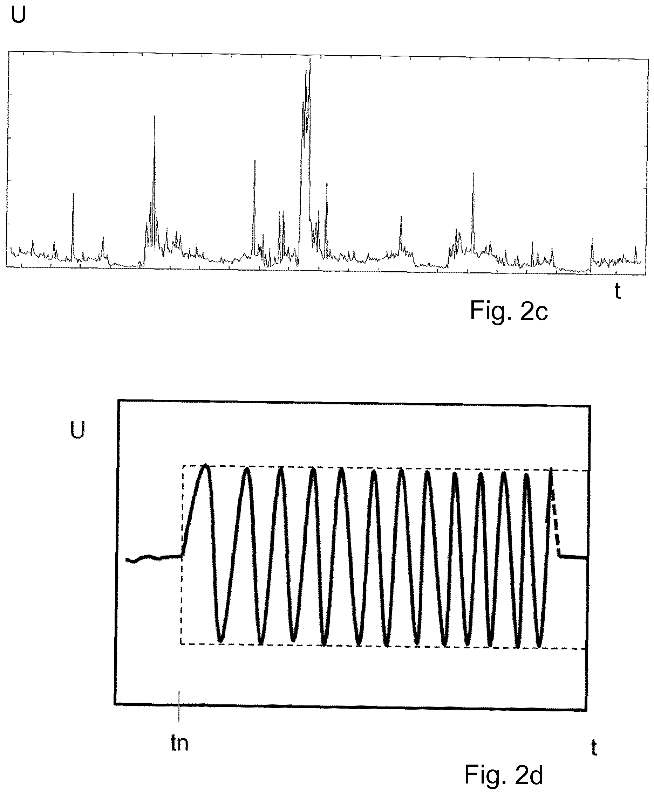

Bei der Signalform bzw. dem Signalmuster gemäß Fig. 2c handelt es sich um einen Kurvenverlauf mit einzelnen, unterschiedlich großen Peaks. Ein derartiger Kurvenverlauf deutet darauf hin, dass verschieden große Partikel (z. B. Steine) durch den Fluidzähler gespült werden und durch den Aufprall auf die Oberfläche des den Ultraschallwandler beherbergenden Einsatzes das gezeigte Signalmuster verursachen.

Periodische Schwingungen mit größerer mehr oder wenig gleichbleibenden Amplitude, vgl. Fig. 2d, können zum Beispiel auf eine durchflussbedingte Vibration aufgrund eines mangelnden Einbaus (z. B. mangelhafte Befestigung) zurückzuführen sein.

Entsprechende (insbesondere empirisch ermittelte) Informationen wie Vergleichssignalformen, Vergleichsintensitäten, Vergleichsfrequenzen und/oder Vergleichszeiträume können in dem Betriebssystem des Fluidzählers "hinterlegt" sein. Hierdurch kann vorteilhaft eine "Art-Zuordnung" von Störereignissen anhand der gemessenen Signale erfolgen und als Folge davon bei Bedarf Steuerungs- und/oder Warnmaßnahmen eingeleitet werden. Die Elektronik des Betriebssystems kann somit zwischen einfachem Signalrauschen, kavitationsspezifischem Signalrauschen, Peaks aufgrund Druckschlägen sowie periodischen Schwingungen durch Vibrationen unterscheiden.

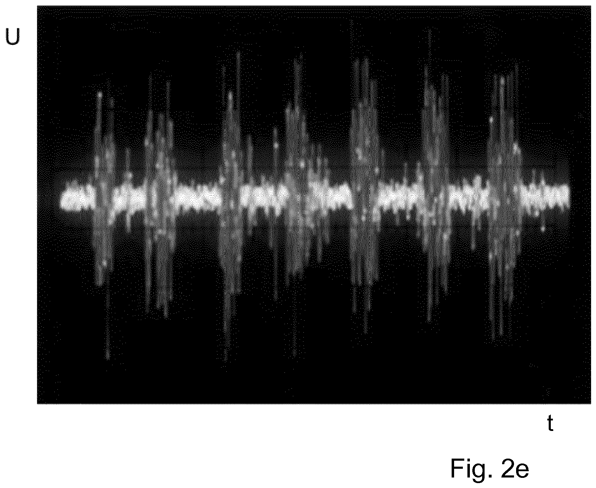

Fig. 2e zeigt beispielsweise einen wiederkehrenden Störfall in Form von zeitlich begrenzten wiederkehrenden Kavitationen. Hierbei ergibt sich ein Kurvenverlauf von zwei verschieden großen Durchflüssen im Wechsel, bedingt durch die wiederholt auftretenden Kavitationen (Zeitraum der großen Amplituden oberhalb des Standardmessbereichs) gegenüber dem "normalen Durchfluss" (Zeitraum der kleinen Amplituden des übliches Rauschens innerhalb des Standardmessbereichs). In den Bereichen der Kavitation ist aufgrund der schlechten Signalqualität keine Laufzeitdifferenzmessung möglich. Der Zeitraum der kleinen Amplitude zeigt demgegenüber den Durchfluss innerhalb der Spezifikation des Fluidzählers, bei dem eine exakte Durchflussmessung stattfinden kann. Das erfindungsgemäße Verfahren ermöglicht es, Zeiträume verminderter Messgenauigkeit genau zu detektieren bzw. lokalisieren, zu dokumentieren und bei der Auswertung mit einzubeziehen.

Das aufgrund eines Geräuschs vom Ultraschallwandler jeweils erzeugte elektrische Signal wird allein aus der mechanischen Energie des Geräuschs und ohne zusätzliche Energie erzeugt.

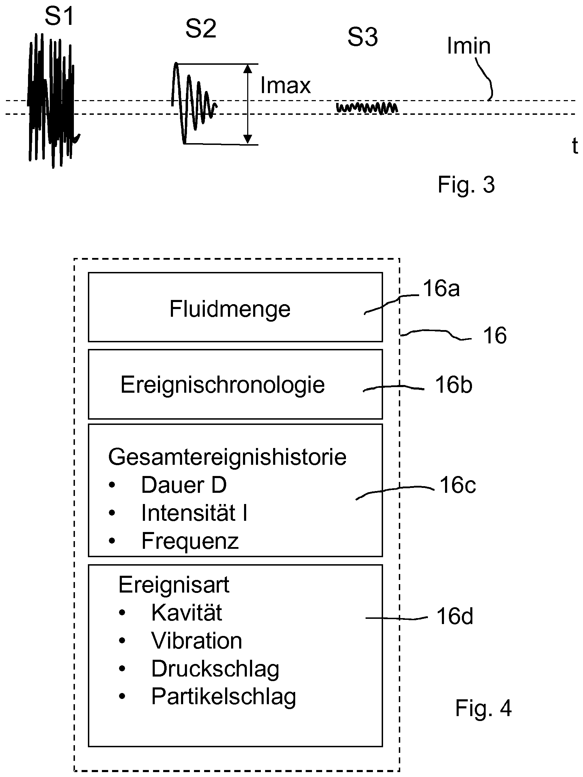

Gemäß der vorliegenden Erfindung sind bei einem Fluidzähler, vgl. z. B. Fig. 4, im Rahmen des Betriebsprogramms 16 mehrere Funktionsmodule vorgesehen, nämlich neben dem Funktionsmodul Fluidmenge 16a ein Funktionsmodul Ereignischronologie 16b sowie darüber hinaus bei Bedarf die weiteren Funktionsmodule Gesamtereignishistorie 16c und/oder Ereignisart 16d.

Im Rahmen des Funktionsmoduls Gesamtereignishistorie 16c können die Ereignisdauer D und/oder Ereignisintensität I und/oder die Frequenz als Informationen abgespeichert und ausgegeben werden. Was das Funktionsmodul Geräuschart 16d anbelangt, kann hierbei beispielsweise zwischen Kavität, Vibration und/oder Überdrück (Druckschlag) unterschieden werden. Die betreffenden Informationen können vorzugsweise am Display 4 des Fluidzählers 1 von Fig. 1 angezeigt werden. Ebenso können bei Bedarf Warnsignale und/oder am Display Warnhinweise ausgegebenen werden. Entsprechend können bei Bedarf entsprechende Ereignisdaten zur Verwaltung und/oder Weiterverarbeitung auch an einen (nicht dargestellten) Datensammler übertragen und einer (ebenfalls nicht dargestellten) Zentrale zugeführt werden.

Gemäß der Erfindung kann, wie dies in Fig. 3 wiedergegeben ist, im Rahmen des Verfahrens eine minimale Intensität Imin vorgegeben sein, mittels der das Vorliegen eines auf einen Störfall folgenden Signals (S1, S2) von bloßem Rauschen bzw. der Durchflussmessung (S3) unterschieden werden kann.

Die Steuer- und Auswerteeinrichtung im Elektronikmodul des Fluidzählers wird abwechselnd in einem Aktivmodus und einem Sleepmodus betrieben. Hierzu ist die Steuer- und Auswerteeinrichtung derart hergerichtet, dass sie erst anhand eines durch ein außergewöhnliches Ereignis der vorstehend genannten Art vom Ultraschallwandler erzeugten elektrischen Signals eine Umschaltung der Steuer- und Auswerteeinrichtung vom Sleepmodus in den Aktivmodus vornimmt.

Die vorliegende Erfindung ermöglicht es neben der Feststellung der Fluidmenge, also der Verbrauchsmenge an Fluid, erstmals den Betrieb eines individuellen Fluidzählers in Bezug auf das Auftreten von geräusch- und/oder schwingungsverursachenden Störfällen am Fluidzähler über seine Lebensdauer hin zu überwachen und exakt zu protokollieren.

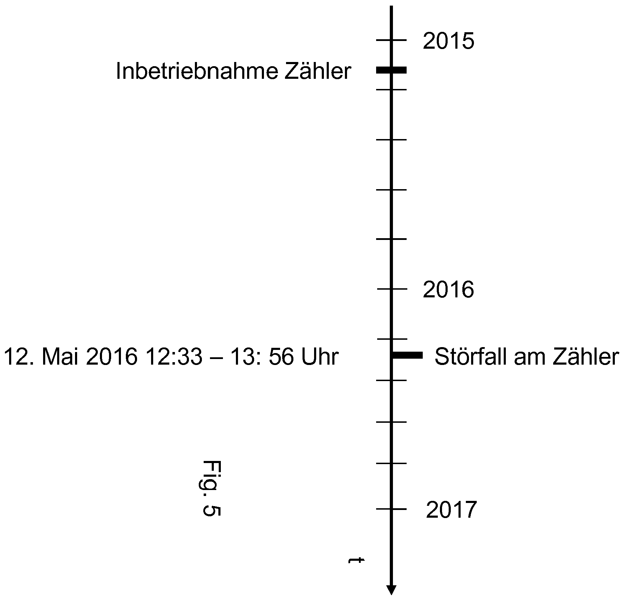

Ein entsprechendes Störfallprotokoll ist, in vereinfachter Darstellungsweise, beispielhaft aus Fig. 5 ersichtlich. Im Betriebssystem des Fluidzählers kann aufgrund der vorliegenden Erfindung ein Störfall festgestellt, aufgezeichnet und bei Bedarf entsprechend protokolliert und analysiert werden. Es kann also eine zusätzliche, für den Betrieb des individuellen Fluidzählers besonders wichtige Information (Betriebseigenschaft) an den Nutzer bzw. Betreiber des Fluidzählers ausgegeben werden. Hierdurch können Fehlmessungen, Fehlbedienungen, Fehlfunktionen sowie weitere nachteilige Beeinträchtigungen des Betriebs des Fluidzählers schnell erfasst und hierdurch Abhilfe geleistet werden. Die vorliegende Erfindung stellt daher einen ganz besonderen Beitrag auf dem einschlägigen Gebiet des Standes der Technik dar.

### BEZUGSZEICHENLISTE

- 1: Fluidzähler
- 2: Anschlussgehäuse
- 3: Elektronikmodul
- 4: Anzeige
- 5: Messkanal
- 6a: Ultraschallwandler
- 6b: Ultraschallwandler
- 7a: Einsatz
- 7b: Einsatz
- 8a: Dichtung
- 8b: Dichtung
- 9a: Deckel
- 9b: Deckel
- 16: Betriebssystem
- 16a: Funktionsmodul Fluidmenge
- 16b: Funktionsmodul Ereignischronologie
- 16c: Funktionsmodul Gesamtereignishistorie
- 16d: Funktionsmodul Ereignisart

## Patentansprüche

1. Verfahren zur Betriebsüberwachung eines in einem Fluidleitungsnetz zur Fluidversorgung installierten individuellen Fluidzählers (1), wobei der Fluidzähler mindestens einen Ultraschallwandler (6a, 6b) umfasst, wobei
mittels des Ultraschallwandlers ein den Ultraschallwandler mechanisch anregendes, nicht der Durchflussmessung zuzurechnendes Ereignis in Form während des Betriebs im Fluidzähler generiertes, durch den Betrieb des Fluidzählers bedingtes Geräusch und/oder in Form eines im Leitungsnetz verursachten Druckschlags selektiv erfasst und ausgewertet wird,
anhand des Ergebnisses dieser Auswertung mindestens eine Fluidzähler-individuelle Betriebseigenschaft generiert wird und
das den Ultraschallwandler mechanisch anregende Ereignis über der Zeit t aufgezeichnet wird, **dadurch gekennzeichnet, dass**
das Ereignis mit einem Zeitstempel versehen wird,
die Ereignisgesamtdauer (D) und/oder Ereignisgesamtintensität (I) der selektiv erfassten Ereignisse über der Zeit (t) aufgezeichnet wird, und
eine geräteindividuelle Ereignishistorie anhand der über der Zeit erfassten, den Ultraschallwandler mechanisch anregenden Ereignisse generiert wird.

2. Verfahren nach Anspruch 1, wobei eine geräteindividuelle Ereignishistorie oder Ereignisinformation einer empirisch ermittelten Ereigniskennlinie und/oder Ereigniskenngröße gegenübergestellt wird und aus dem Vergleich eine Ereignis/Schädigungsart-Zuordnung und/oder eine Steuer- und/oder Kontrollgröße abgeleitet wird bzw. werden.

3. Verfahren nach Anspruch 1 oder 2, wobei bei Überschreiten einer festgelegten Ereignisdauer (D) und/oder Ereignisintensität (I) ein Warnsignal und/oder ein Warnmeldung erzeugt wird.

4. Verfahren nach einem der vorhergehenden Ansprüche, wobei bei dem den Ultraschallwandler mechanisch anregenden Ereignis in Form eines im Leitungsnetz verursachten Druckschlags dessen Maximalintensität erfasst und ausgewertet wird.

5. Verfahren nach einem der vorhergehenden Ansprüche, wobei
eine Steuer- und Auswerteeinrichtung des Fluidzähler abwechselnd in einem Aktivmodus und einem Sleepmodus betrieben wird und
die Steuer- und Auswerteeinrichtung derart hergerichtet ist, dass sie erst anhand eines durch ein Ereignis vom Ultraschallwandler erzeugten elektrischen Signals eine Umschaltung der Steuer- und Auswerteeinrichtung vom Sleepmodus in den Aktivmodus vornimmt.

6. Verfahren nach einem der vorhergehenden Ansprüche, wobei das aufgrund eines Ereignisses vom Ultraschallwandler erzeugte elektrische Signal allein aus der mechanischen Energie des Ereignisses und ohne zusätzliche Energie erzeugt wird, wobei insbesondere vorgesehen ist, dass das elektrische Signal ein Signalmuster und/oder ein Frequenzspektrum und/oder ein Maximalpegel ist.

7. Verfahren nach einem der vorhergehenden Ansprüche, wobei der Ultraschallwandler zur selektiven Erfassung und Auswertung des Ereignisses Bestandteil einer Ultraschallwandleranordnung zur Laufzeitermittlung ist.

8. Verfahren nach einem der vorhergehenden Ansprüche, wobei es sich bei dem Ereignis jeweils um
ein vorzugsweise Fluidzähler-bedingtes Kavitationsgeräusch und/oder
ein vorzugsweise Fluidzähler-bedingtes Vibrationsgeräusch und/oder
eine mechanische Beaufschlagung des Ultraschallwandlers durch im Fluidzähler befindliche oder durch diesen hindurchgespülte Partikel handelt.

9. Durchflusszähler (1) zur Durchflussmessung in einem Fluidleitungsnetz zur Fluidversorgung, vorzugsweise einem Wasserleitungsnetz zur Wasserversorgung, mit
einer Ultraschallwandleranordnung zur Laufzeitmessung, die mindestens einen, vorzugsweise zwei Ultraschallwandler (6a, 6b) zum Aussenden und/oder Empfang von Ultraschallwellen in das Fluid oder aus dem Fluid umfasst,
einem Elektronikmodul (3) mit einer Steuer- und Auswerteeinrichtung sowie einem Betriebssystem (16) zum Ansteuern sowie zur Signalerfassung und Signalauswertung der Ultraschallwandler (6a, 6b) sowie
einer elektrischen Energiequelle, **dadurch gekennzeichnet, dass** das Betriebssystem (16) einen neben der Durchflussmessung zusätzlichen Funktionsmodus beinhaltet, mit dem ein Verfahren gemäß einem der vorhergehenden Ansprüche betrieben wird.

10. Durchflusszähler nach Anspruch 9, wobei dieser über ein Anschlussgehäuse (2) verfügt, mittels welchem der Durchflusszähler (1) in das Fluidleitungsnetz installierbar ist, wobei insbesondere vorgesehen ist, dass ein Messeinsatz (5) innerhalb des Anschlussgehäuses (2) angeordnet ist, welcher ein Messrohr, Umlenkspiegel (7a, 7b) für das Ultraschallsignal sowie Strömungsleiteinrichtungen umfasst.

## Claims

1. Method for monitoring the operation of an individual fluid meter (1) installed in a fluid-supplying fluid distribution system, wherein the fluid meter comprises at least one ultrasonic transducer (6a, 6b), wherein
by means of the ultrasonic transducer, an event which mechanically excites the ultrasonic transducer and is not attributable to the flow measurement, in the form of noise generated during operation in the fluid meter and caused by the operation of the fluid meter and/or in the form of a pressure surge caused in the pipe system, is selectively detected and evaluated,
by reference to the result of said evaluation, at least one fluid meter-specific operating property is generated, and
the event which mechanically excites the ultrasonic transducer is recorded over the time t, **characterized in that**
the event is identified by a time stamp,
the total event duration (D) and/or the total event intensity (I) of the selectively detected events are recorded over the time t, and
a device-specific event history is generated by reference to the events which mechanically excite the ultrasonic transducer and are detected over time.

2. Method according to Claim 1, wherein
a device-specific event history or event information is compared with an empirically determined event characteristic curve and/or event characteristic variable, and an event/damage type classification and/or a control variable and/or regulating variable is/are deduced from the comparison.

3. Method according to Claim 1 or 2, wherein
in the event of an overshoot of a specified event duration (D) and/or event intensity (I), a warning signal and/or a warning message is generated.

4. Method according to one of the preceding claims, wherein
in the case of the event which mechanically excites the ultrasonic transducer in the form of a pressure surge caused in the pipe system, the maximum intensity thereof is detected and evaluated.

5. Method according to one of the preceding claims, wherein
a control and evaluation device of the fluid meter is alternately operated in an active mode and a sleep mode, and
the control and evaluation device is designed such that it executes a switchover thereof from the sleep mode to the active mode only in response to an electrical signal generated by the ultrasonic transducer as a result of an event.

6. Method according to one of the preceding claims, wherein the electrical signal generated by the ultrasonic transducer in response to an event is generated solely from the mechanical energy of said event, with no additional energy, wherein provision is made, in particular, for the electrical signal to be a signal pattern and/or a frequency spectrum and/or a maximum level.

7. Method according to one of the preceding claims, wherein the ultrasonic transducer for the selective detection and evaluation of the event is a constituent of an ultrasonic transducer assembly for the determination of transit time.

8. Method according to one of the preceding claims, wherein the event respectively involves
a preferably fluid meter-related cavitation noise, and/or
a preferably fluid meter-related vibration noise, and/or
a mechanical stress applied to the ultrasonic transducer by particles which are present in the fluid meter or are flushed through the latter.

9. Flow meter (1) for flow measurement in a fluid-supplying fluid distribution system, preferably a water distribution system for the supply of water, having
an ultrasonic transducer assembly for transit time measurement, which comprises at least one, and preferably two ultrasonic transducers (6a, 6b) for the transmission and/or reception of ultrasonic waves to the fluid or from the fluid,
an electronic module (3) having a control and evaluation device and an operating system (16) for actuation, signal detection and signal evaluation of the ultrasonic transducers (6a, 6b) and
an electrical energy source, **characterized in that**
the operating system (16), in addition to flow measurement, incorporates an additional functional mode, with which a method according to one of the preceding claims is conducted.

10. Flow meter according to Claim 9, wherein the latter comprises a connection housing (2), by means of which the flow meter (1) can be installed in the fluid distribution system, wherein provision is made, in particular, for a measuring insert (5) to be arranged within the connection housing (2), which comprises a measuring tube, deflection mirrors (7a, 7b) for the ultrasonic signal and flow guiding devices.

## Revendications

1. Procédé de surveillance du fonctionnement d'un compteur de fluide individuel (1) installé dans un réseau de conduites de fluide destiné à l'alimentation en fluide,
le compteur de fluide comprenant au moins un transducteur à ultrasons (6a, 6b),
le transducteur à ultrasons étant utilisé pour détecter et évaluer sélectivement un événement qui stimule mécaniquement le transducteur à ultrasons, qui n'est pas attribuable à la mesure de débit, qui se présente sous la forme de bruit généré pendant le fonctionnement dans le compteur de fluide et provoqué par le fonctionnement du compteur de fluide et/ou sous la forme d'un coup de bélier provoqué dans le réseau de conduites,
au moins une propriété de fonctionnement spécifique au compteur de fluide étant générée sur la base du résultat de cette évaluation et
l'événement qui stimule mécaniquement le transducteur à ultrasons étant enregistré pendant le temps t, **caractérisé en ce que**
l'événement est pourvu d'un horodatage,
la durée d'événement totale (D) et/ou l'intensité totale (I) des événements détectés sélectivement est/sont enregistrée(s) dans le temps (t), et
un historique d'événements spécifique à l'appareil est généré sur la base des événements détectés dans le temps et stimulant mécaniquement le transducteur à ultrasons.

2. Procédé selon la revendication 1,
un historique d'événement ou une information d'événement spécifique à l'appareil étant comparé(e) à une caractéristique d'événement et/ou à une grandeur d'événement déterminée(s) de manière empirique et une association de type événement/dommage et/ou une grandeur de commande et/ou de contrôle étant déduite(s) de la comparaison.

3. Procédé selon la revendication 1 ou 2,
un signal d'avertissement et/ou un message d'avertissement étant généré(s) lorsqu'une durée d'événement (D) et/ou une intensité d'événement (I) spécifiée(s) est/sont dépassée(s).

4. Procédé selon l'une des revendications précédentes,
l'intensité maximale de l'événement étant détectée et évaluée lorsque celui-ci stimule mécaniquement le transducteur à ultrasons et se présente sous la forme d'un coup de bélier provoqué dans le réseau de conduites.

5. Procédé selon l'une des revendications précédentes,
un dispositif de commande et d'évaluation du compteur de fluide fonctionnant alternativement dans un mode actif et un mode veille et
le dispositif de commande et d'évaluation étant conçu de manière à effectuer une commutation du dispositif de commande et d'évaluation du mode veille dans le mode actif uniquement sur la base d'un signal électrique généré par le transducteur à ultrasons à la suite d'un événement.

6. Procédé selon l'une des revendications précédentes,
le signal électrique généré par le transducteur à ultrasons à la suite d'un événement étant généré uniquement à partir de l'énergie mécanique de l'événement et sans énergie supplémentaire, le signal électrique étant notamment prévu pour être un motif de signal et/ou un spectre de fréquences et/ou un niveau maximum.

7. Procédé selon l'une des revendications précédentes,
le transducteur à ultrasons destiné à détecter et évaluer sélectivement l'événement faisant partie d'un ensemble de transducteurs à ultrasons destiné à déterminer le temps de propagation.

8. Procédé selon l'une des revendications précédentes,
l'événement étant dans chaque cas
un bruit de cavitation provoqué de préférence par le compteur de fluide et/ou
un bruit de vibration provoqué de préférence par le compteur de fluide et/ou
une sollicitation mécanique du transducteur à ultrasons par des particules situées dans le compteur de fluide ou refoulées à travers celui-ci par lavage.

9. Débitmètre (1) destiné à mesurer le débit dans un réseau de conduites de fluide destiné à l'alimentation en fluide, de préférence un réseau de conduites d'eau destiné à l'alimentation en eau, ledit débitmètre comprenant
un ensemble de transducteurs à ultrasons destiné à mesurer le temps de propagation, lequel comprend au moins un transducteur à ultrasons, de préférence deux transducteurs à ultrasons (6a, 6b) destiné(s) à émettre des ondes ultrasonores dans le fluide et/ou les recevoir de celui-ci,
un module électronique (3) comprenant un dispositif de commande et d'évaluation et un système de fonctionnement (16) destiné à la détection de signal et à l'évaluation de signal des transducteurs à ultrasons (6a, 6b) et
une source d'énergie électrique, **caractérisé en ce que**
le système de fonctionnement (16) contient, outre la mesure de débit, un mode de fonctionnement supplémentaire permettant de mettre en œuvre un procédé selon l'une des revendications précédentes.

10. Débitmètre selon la revendication 9,
ledit débitmètre disposant d'un boîtier de raccordement (2) qui permet d'installer le débitmètre (1) dans le réseau de conduites de fluide, en particulier un insert de mesure (5) étant prévu pour être disposé à l'intérieur du boîtier de raccordement (2) et comprenant un tube de mesure, des miroirs de déflexion (7a, 7b) destinés au signal ultrasonore et des dispositifs de guidage d'écoulement.
